# EUROPEAN PATENT APPLICATION

(11) **EP 4 760 593 A1**
(43) Date of publication of application: **17.06.2026**
(21) Application number: 24220348.7
(22) Date of filing: 16.12.2024
(51) Int. Cl.: G06N 3/044, G06N 3/065

(54) **ONE-TRANSISTOR RESERVOIR COMPUTER USING FLOATING BODY EFFECT**

(71) Applicant: Imec VZW, 3001 Leuven (BE); Katholieke Universiteit Leuven KU Leuven Research & Development, 3000 Leuven (BE)
(72) Inventor: GUO, Yuanyang, 3000 Leuven (BE); DEGRAEVE, Robin, 9840 De Pinte (BE); SARAZA CANFLANCA, Pablo, 3001 Heverlee (BE)
(74) Representative: Winger

(57) **Abstract**

A reservoir computing method and related system. The method comprises providing a pulse wave representation of a reservoir input and a MOSFET-based compute node of a reservoir computing system. A body terminal of the MOSFET is configured to apply a bias signal to the body region. The MOSFET is operable in floating mode in the absence of the bias signal. The MOSFET displays a history-dependent threshold voltage when driven by input pulses in floating mode. The method further includes removing the bias signal from the body terminal; applying input pulses to a gate terminal of the MOSFET, thus causing history-dependent variations in the threshold voltage; and acquiring an output sequence related to the compute node while the MOSFET threshold voltage is varying, by repeatedly applying readout pulses to the gate terminal of the MOSFET and simultaneously detecting a current through a channel region of the MOSFET.

## Description

### Field of the invention

The present invention relates to the field of time series processing and related processing systems, and in particular relates to transistor-based reservoir computing methods and systems.

### Background of the invention

Reservoir computing (RC) is an alternative computing scheme that exploits the transient behavior of complex dynamical systems. It emerged as a computational paradigm stemming from recurrent neural networks, leveraging the inherent dynamics of physical systems to process temporal data. This approach has shown promise in a variety of applications, including signal processing, pattern recognition, and time-series prediction. Over the years, RC has evolved to exploit a diverse range of physical device implementations that aim to capitalize on its potential for efficient and high-speed computation.

In traditional reservoir computers, a large number of interconnected nonlinear compute nodes form a computing network, i.e. the reservoir, in which complex spatiotemporal patterns are excited through the time-dependent input data. A readout layer is trained to predict future inputs or classify inputs based on the observed patterns in the reservoir. In contrast to most neural networks, e.g. deep neural networks, convolutional neural network or recurrent neural networks, the internal connections between compute nodes of the reservoir computer are random and left untrained. Due to their large number of compute nodes, traditional reservoir computers are lacking resource-efficiency and compactness. Moreover, true random connections between the compute nodes are difficult to realize in hardware.

One avenue of exploration within RC involves the use of single dynamic nodes to simulate complex network behavior. These implementations often utilize physical devices that apply nonlinear transformations to time-multiplexed, so-called "virtual nodes" over time, effectively reducing hardware complexity. However, many of these hardware implementations rely on non-standard devices, such as custom-fabricated electronics components. This can lead to increased manufacturing costs and complicate the scalability and widespread adoption of RC systems in commercial electronics.

For instance, in journal publication Appeltant, L. et al. "Information processing using a single dynamical node as complex system", Nature Communications, 2:468 (2011), a single-node reservoir computer with delay dynamics has been described. Therein, temporal inputs are first multiplied with a sequence of input weights (mask) and then time-multiplexed to constitute an input stream to the single nonlinear node - an analog electronic oscillator circuit. Outputs from the nonlinear node are placed as virtual nodes (time bins) on a delayed feedback line, from which they can be retrieved by a linear readout layer. More precisely, the readout layer combines the information of many virtual nodes in analogy to the combination of the outputs of many physical nodes by the readout layer of a traditional reservoir computer. This delayed feedback single-node reservoir computer is more resource-friendly than traditional reservoir computers, but requires a complex, dedicated analog electronic oscillator as nonlinear node. Digital-to-analog and analog-to-digital conversion are applied before and after the nonlinearity, respectively. More energy- and area-efficient compute nodes are still desirable.

Other hardware implementations use arrays of non-standard devices and materials, such as specialized resistive memory elements. The reliance on non-standard technologies can pose significant challenges for integration with conventional complementary metal-oxide-semiconductor (CMOS) processes. This can lead to increased manufacturing costs and complicate the scalability and widespread adoption of RC systems in commercial electronics.

For exemple, in journal publication Du, C. et al. "Reservoir computing using dynamic memristors for temporal information processing", Nature Communications, 8:2204 (2017), discloses a reservoir computer that uses a dynamic array of 88 memristor for direct information processing in the temporal domain. The WOx memristors are selected from a 32x32 crossbar array that has been fabricated on a custom-made PCB. A disadvantage of the memristor-based reservoir computer is that it uses non-standard devices and non-standard materials, which makes the integration with mainstream bulk CMOS technology or silicon on insulator (SOI) technology more difficult.

Yet other implementations exploit stochastic memory effects in standard devices. For instance, in Y. Guo et al., "Exploiting Bias Temperature Instability for Reservoir Computing in Edge Artificial Intelligence Applications," 2024 IEEE International Reliability Physics Symposium (IRPS), Grapevine, TX, USA, 2024, pp. 1-7, the authors demonstrated that the Negative Bias Temperature Instability (NBTI) effect in pFETs can be used for one-shot learning in physical reservoir computers.

Such implementations, however, face issues related to the stochastic nature of the physical phenomena they exploit. Variability arising from random defect distributions or fluctuations in material properties can result in inconsistent device behavior. This variability manifests both between nominally identical devices (inter-device variability) and within a single device over time (intra-device variability). Such unpredictability can adversely affect the reproducibility and reliability of computational outcomes, which is particularly problematic in applications requiring high precision and consistency. For instance, in applications like gait authentication, which depend on the accurate processing of temporal biometric data, variability in device response can compromise performance. The need to address inconsistencies may necessitate additional post-processing steps to normalize or calibrate the output signals. This extra processing can increase system complexity and power consumption, potentially diminishing the advantages offered by RC in low-power applications.

Despite the advancements in reservoir computing and its potential for efficient temporal data processing, the challenges related to integration with standard bulk CMOS or SOI processes, improving reproducibility and reliability, and reducing the necessity for complex post-processing are important steps toward realizing the full potential of RC in practical applications. Therefore, there is an ongoing need for improved or alternative hardware solutions for reservoir computing systems which address these challenges.

### Summary of the invention

It is an object of embodiments of the present invention to provide standard hardware implementations of reservoir computing systems and related methods, which are compatible with standard CMOS or SOI processes and less prone to device variability.

The above objective is accomplished by methods and devices according to the present invention.

The floating body effect, traditionally considered a reliability issue in the design and operation of field effect transistors (FETs) realized in silicon on insulator (SOI) technology, describes the dependence of the transistor body potential on the switching history and carrier recombination dynamics. Charges tend to accumulate in the floating body region of a FET, which forms a capacitor against the substrate in which the transistor is formed. The transistor body region is floating if it is not tied to a fixed potential such as signal ground. It is commonly accepted that the floating body effect is mainly caused by electron-hole pair generation through impact ionization at channel-drain junction if the electric field is high, e.g. in saturation mode. In contrast to the generated electrons, which are collected at the drain electrode, the generated holes start accumulating in the floating body region, thus increasing the body potential. Charge recombination and discharging processes have the opposite effect of discharging the capacitor associated with the floating body. For large enough body-source voltages exceeding the forward threshold voltage associated with the body-source diode, a forward current may contribute to the discharging of the floating body region. Under ac conditions, capacitive coupling between the body region and the other terminals, leads to an additional overshoot or undershoot of the body potential and, due to the body effect, also of transistor threshold voltage. The fluctuating body potential is the source of circuit reliability issues and device degradation in traditional SOI-FETs, including the variability in the threshold voltage (Vth), the increase of the drain current, the kink effect observable in the drain current, transistor state dependence of the threshold voltage and propagation delay (history effect), self-heating, the occurrence of parasitic bipolar transistors, etc. Although primarily known in the field of SOI-FET design, the floating body effect also exists in bulk CMOS MOSFETs in which the body region is not biased and, hence, is floating.

Efforts have been made to reduce or avoid the floating body effect, thereby improving circuit reliability and limiting device degradation. On the one hand, fully depleted (FD) ultra-thin body (UTB) MOSFETs have been developed in SOI technology, in which the silicon film in the transistor channel region is thinner than the depletion depth of the body. The observed floating body effect is much smaller in FD-SOI MOSFETs compared to standard SOI MOSFETs, and an efficient coupling between transistor back-gate and transistor front-gate can be obtained. On the other hand, body-contacted SOI MOSFETs provide for an additional body contact through which the body voltage is pinned to a fixed potential such as signal ground (GND).

To their great surprise, the inventors have found that the floating body effect can be beneficial in the context of unconventional RC methods and related systems. Indeed, the history dependent threshold voltage shifts (i.e., dependent on switching inputs) caused by the floating body effect are effective in providing both short-term memory and increased output nonlinearity to MOSFETs- two essential properties in the field of reservoir computing.

In one aspect, the present invention relates to a reservoir computing method comprising the steps of: providing a pulse wave representation of a time-dependent reservoir input, said pulse wave representation comprising a sequence of input pulses; providing a MOSFET as a compute node of a reservoir computing system. The MOSFET comprises a channel region between a source region and drain region, a body region adjacent to the channel region, a gate stack in contact with the channel region, a gate terminal connected to the gate stack, and a body terminal configured to apply a bias signal to the body region to control a voltage difference between the source region and the body region of the MOSFET. The method further comprises the steps of: removing the bias signal from the body terminal to operate the MOSFET in a floating mode, the MOSFET displaying an input history-dependent threshold voltage when driven by the sequence of input pulses in the floating mode, and said bias signal applied to the body terminal to operate the MOSFET in a tied mode; applying the sequence of input pulses to the gate terminal of the MOSFET, each input pulse having a voltage amplitude larger than the threshold voltage of the MOSFET, thus causing input history-dependent variations in the threshold voltage; acquiring an output sequence related to the compute node while the MOSFET threshold voltage is varying, by repeatedly applying readout pulses to the gate terminal of the MOSFET and simultaneously detecting a current through the channel region of the MOSFET, said readout pulses having a smaller amplitude compared to the input pulses.

In embodiments, a variation of the threshold voltage due to changes in the floating body potential translates into a corresponding variation of the readout current flowing between the source and the drain region of the MOSFET, which is detected during the application of each readout pulse. Therefore, the detected readout currents represent variations of the MOSFET threshold voltage that are induced by individual input pulses or a series of consecutive input pulses of the sequence of input pulses. In reservoir computing methods, the readout currents are usually detected while the MOSFET is still in a transient regime, that is before the MOSFET state has reached its equilibrium and the floating body potential has decayed. The MOSFET threshold voltage and the MOSFET drain current detected in response to a readout pulse are restored to their original values (e.g., nominal values) when no more input pulses are applied and the floating body potential has fully decayed.

In embodiments, the readout pulses may be adapted to bias the MOSFET in the subthreshold region. This allows for ultra-low energy operation of the MOSFET during readout intervals, i.e. intervals during which one of the readout pulses is applied and a current flowing between the source and the drain regions is detected as the readout current. Moreover, applying readout pulses that bias the MOSFET in the subthreshold region, i.e. sub-threshold readout pulses, has the additional advantage of not disturbing or only minimally disturbing the MOSFET's dynamical state, e.g. the current threshold voltage value. Sub-threshold readout pulses disturb the MOSFET's dynamical state less than above-threshold readout pulses, the latter still being weak in amplitude and/or duration compared to the input pulses.

In embodiments, the readout pulses may be applied at regular time intervals. Consecutive readout pulses may be separated in time by a predetermined number of input pulses. This provides flexibility in the readout timing.

In embodiments, a first pulse of the sequence of input pulses may be delivered to the gate terminal of the MOSFET at a start time and a last pulse of the sequence of input pulses may be delivered to the gate terminal of the MOSFET at an end time, whereas one or more readout pulses are applied to the gate terminal of the MOSFET between the start time and the end time. In embodiments, an interrupt signal may be generated to pause or abort the application of input pulses from the sequence of input pulses for the time one of the readout pulses is being applied to the gate terminal. Applying the pulses of the sequence of input pulses may be continued or resumed after delivery of the respective readout pulse. A control or timing unit of the reservoir computing system may be configured to send the interrupt signal to driver circuits associated with the MOSFET-based compute nodes of the reservoir (reservoir nodes), which driver circuits are configured to generate and deliver the sequence of input pulses and the individual readout pulses to respective ones of the MOSEFT-based reservoir nodes.

In embodiments, the MOSFET is operated in the floating mode while the readout pulses are applied. A drain-source voltage may be applied between the drain region and the source regions of the MOSFET, e.g. between a drain contact and a source contact of the MOSFET, while individual readout pulses are applied to the gate terminal. The drain-source voltage may be removed while individual input pulses of the sequence of input pulses are applied to the gate terminal. Input pulses of the sequence of input pulses are also referred to as write pulses.

In embodiments, a readout pulse may be applied after each write pulse or after a predetermined number of consecutive write pulses. The readout pulses may be applied after a predetermined delay relative to the first write pulse, e.g. readout pulses may be applied after the n-th write pulse has been applied, where n ≥1. The write pulses may be applied at regular time intervals, e.g. at an input/write pulse rate that maintains the MOSFET-based compute node in a transient regime. This means that the write pulses perpetually perturb the MOSFET threshold dynamics and usually prevent the MOSFET-based compute node from attaining an equilibrium state, e.g. the equilibrium threshold voltage, and remaining in the equilibrium state for extended periods of time. This is typically achieved by successively applying the write pulses such that a time interval between any two write pulses, T, is shorter than the slowest relaxation time constant τ that governs the MOSFET's threshold voltage dynamics, e.g. by choosing T > i. There is at least one relaxation constant associated with the discharging of the floating body region (capacitance) by charge recombination mechanisms or leakage currents. Conversely, typical readout pulses are chosen such that the reservoir state, e.g. the MOSFET threshold dynamics, is not at all or only minimally perturbed, thus preventing a readout pulse to act in the same way as a write pulse. This means that the application of each readout pulse does not cause a substantial change in the MOSFET threshold dynamics. This is typically achieved by reducing the amplitude and/or duration of the readout pulses relative to the write pulses.

In embodiments of the invention, each MOSFET-based compute node of the reservoir computing system may be reset before the delivery of the input pulse sequence corresponding to a fresh time-dependent input signal. The reset may be a hard reset which drives the MOSFET threshold voltages back to their equilibrium, e.g. steady-state value in the absence of any inputs at the gate terminal. Alternatively, the reset may be performed with respect to a different threshold voltage. In embodiments, a hard reset may be performed by applying the same bias signal to the source region and the body region (through the body terminal), e.g. selecting the signal ground (GND) as the bias signal, thus operating the MOSFET in the tied mode. In embodiments, a reset with respect to a different threshold voltage may be performed by applying the bias signal to the body terminal to operate the MOSFET in the tied mode, wherein the bias signal differs from the potential of the source region, e.g. selecting the bias signal to be different from a source voltage signal that is applied to source region via a source terminal/contact of the MOSFET.

In other embodiments, no reset is performed before the delivery of the input pulse sequence corresponding to a fresh time-dependent input signal. Indeed, owing to the well-known fading memory property of reservoir computing systems, the reservoir state (e.g. the threshold voltages of all MOSFET-based reservoir nodes) only depends on the inputs of the recent past but not on the initial conditions. Accordingly, the readout pulses may be applied with a delay relative to the start time of the sequence of write pulses such that the MOSFET threshold voltages are no longer dependent on the initial conditions. Alternatively, the current measurements obtained for the respective readout pulses may be accumulated or time-averaged such that for long enough write pulse sequences the contribution of the initial conditions to the accumulated or time-averaged current is becoming vanishingly small.

In yet other embodiments, a pre-established and fixed initialization sequence of write pulses is applied prior to each fresh input sequence of write pulses and no reset is performed before the delivery of the pulse sequence corresponding to a fresh time-dependent input signal. By the time the initialization sequence has been applied to the MOSFET-based compute nodes of the reservoir, the influence of the initial conditions has faded.

In embodiments, the MOSFET of the MOSFET-based compute node of the reservoir computing system may have a separate terminal or contact for each of the following regions: the source region, the drain region, the body region. The terminals for the source and drain region are configured to respectively bias the source and drain region at a source and drain potential, such that a drain-source voltage signal can be applied between the drain and the source region and across the channel region in between. In embodiments, the MOSFET of the MOSFET-based compute node of the reservoir computing system may have a top-gate configuration in which the gate stack is formed over or atop the channel region, and the body region is in contact with and extends immediately below the channel region. In alternative embodiments, the MOSFET of the MOSFET-based compute node of the reservoir computing system may have a bottom-gate configuration in which the gate stack is formed below or underneath the channel region, and the body region is in contact with and extends immediately above the channel region.

In embodiments, the MOSFET-based compute node may comprise MOSFET in which the body region is electrostatically decoupled from the substrate region. The MOSFET may be a bulk MOSFET, realized by a standard CMOS (e.g. a CMOS-type bulk MOSFET), which comprises a separate body terminal for contacting the body region. The MOSFET may be realized by a planar process, i.e. be a planar MOSFET device having planar geometry compared to non-planar devices like FinFETs, which implement vertical transistor channels on a planar substrate surface. The CMOS-type bulk MOSFETs may be implemented as p-type or n-type MOSFETs. In alternative embodiments, the MOSFET may may be realized by a non-planar process, e.g. a FinFET such as a bulk-type FinFET.

In other embodiments, the MOSFET-based compute node may comprise an SOI-type MOSFET, e.g. a partially depleted (PD) MOSGFET realized in an SOI technology, which comprises a separate body terminal for contacting the body region and an insulating layer between the body region and the bulk substrate.

In embodiments, the method may further comprise the steps of: obtaining a digital representation of the reservoir input, including a plurality of digital samples; buffering the digital samples; generating the sequence of input pulses from the buffered digital samples and driving the gate terminal of the MOSFET with the sequence of input pulses at a predetermined input driving rate. Preferably the predetermined input driving rate is selected so that the MOSFET remains in a transient condition while the sequence of input pulses is applied. This can be achieved by selecting an input driving rate that is faster than a decay rate associated with the discharging of the floating body potential (e.g. τ⁻¹, the inverse of the slowest relaxation time constant) in the absence of transistor inputs at the gate terminal of the MOSFET. This ensures the MOSFET-based compute nodes of the reservoir computing system contribute to the reservoir dynamics.

In embodiments, charge trapping sites may be located in a gate dielectric of the MOSFET gate stack, said MOSFET thus displaying bias temperature instability (BTI) when subjected to voltage stress and further displaying threshold voltage recovery after removal of the voltage stress. Like the floating body effect, the BTI effect is traditionally considered undesirable; the resulting variations in the MOSFET threshold voltage may comprise the correct functioning of circuitry that is using the MOSFET and performance degradation is often linked to the BTI effect. However, the inventors have found that the BTI effect is beneficial in the context of reservoir computing, where MOSFET-based compute nodes of the reservoir gain in short-term memory and output nonlinearity if the MOSFETs exhibit the BTI effect.

In embodiments, the method may further comprise the steps of: supplying the bias signal to the body terminal to operate the MOSFET in the tied mode; applying the sequence of input pulses to the gate terminal of the MOSFET, thereby causing an input history-dependent shift in the MOSEFT threshold voltage. The input pulses of the sequence of input pulses are typically driven with larger voltage amplitudes in the tied mode than in the floating mode, thus achieving a BTI mode of operation of the MOSFET. This allows seamless switching between floating (body) and BTI modes of operation.

Although the floating mode and BTI modes of operation both display dynamic shifts in the MOSFET threshold voltage and corresponding shifts in the detected readout currents, e.g. drain currents of the MOSFET during the application of a readout pulse, the time constants governing the dynamics of the MOSFET, e.g. the respective relaxation time constants associated with the discharging of the floating body capacitance in the floating mode of operation and the threshold voltage recovery in the BTI mode of operation, are usually very different from each other. Typically, there are two time constants associated with the floating body effect: the charging time constant and the discharging time constant. They are usually in the range from milliseconds to seconds, e.g. about 1s for a 28nm NFET device of dimension 900 nm x 200 nm. Charging and discharging characteristics of the floating body capacitance may follow an exponential curve. In contrast thereto, many different relaxation time constants (e.g., aggregation of capture and emission time constants for each localized defect) are associated with the threshold voltage recovery in the BTI mode of operation, and these relaxation time constants are distributed over a wide range, e.g. spanning multiple decades, e.g. spanning multiple orders of magnitude, e.g. ranging from hundreds of nanoseconds to microseconds to seconds to days or more. Charge trapping and emission characteristics linked to the BTI effect are often very different from a simple exponential law. This means that threshold voltage recovery in the BTI mode of operation happens at many different time scales. In contrast to the floating body effect, the threshold voltage changes due to the BTI effect are intrinsically stochastic, thus leading to inter-device and intra-device variability. On the other hand, the MOSFET dynamics are much richer in the presence of the BTI effect compared to the floating body effect, which allows for the processing of more complex reservoir input signals, e.g. reservoir input signals that evolve at various time scales or include signal components of different time scales. Therefore, providing a reservoir computing system and related method, in which MOSFET-based compute nodes are selectively operable in the floating mode or the BTI mode has the additional advantage of increased system flexibility, offering the choice between processing a wider class of reservoir input signals in the BTI mode and enhanced reproducibility of reservoir outputs, less randomness in the inter-device and intra-device performance, and the possibility of using reservoir outputs without further post-processing in the floating mode. Depending on the application or task to be performed by the RC system, the mode of operation can be toggled to the floating mode or the BTI mode. Moreover, users are given the opportunity to test both modes of operation and subsequently select the best-performing one.

In embodiments, the MOSFET-based compute node may first be operated in the floating mode and thereafter in the BTI mode. In this case, the sequence of input pulses is first applied to the MOSFET gate terminal in the floating mode of operation and later re-applied to the MOSFET gate terminal in the BTI mode of operation, provided that the same sequence of input pulses is replayed. In other embodiments, the MOSFET-based compute node may first be operated in the BTI mode and thereafter in the floating mode. In this other case, the sequence of input pulses is pulses is first applied to the MOSFET gate terminal in the BTI mode of operation and later re-applied to the MOSFET gate terminal in the floating mode of operation, provided that the same sequence of input pulses is replayed.

In embodiments, the readout pulses may be configured to bias the MOSFET in the sub-threshold region when operated in the BTI mode. This allows for energy savings and minimal disturbance of the dynamic MOSFET state, e.g. threshold voltage value, during the application of readout pulses.

In embodiments, source/drain terminals of the MOSFET may be connected to the same voltage (e.g. ground or Vss for NFET devices and Vdd for PFET devices) during application of the input pulses and a voltage differential may be applied between said source/drain terminals during application of the readout pulses.

In embodiments, the step of providing the pulse wave representation of the time-dependent input signal may comprise encoding the time-dependent input signal into a digital pulse train.

In embodiments, the readout currents detected with respect to the MOSFET may constitute vector components of a feature vector associated with the reservoir input. Different features (i.e. vector components of the feature vector) are associated with readout currents through the MOSFET channel region which are detected at different moments in time.

In embodiments, any or all the preceding steps may be performed for each of a plurality of MOSFET-based compute nodes of the reservoir computing system.

In embodiments, the method may further comprise: accumulating the readout currents detected for the respective compute node MOSFETs into components of a feature vector associated with the reservoir input. This means that the detected readout currents of each MOSFET-based compute node are accumulated into a corresponding feature (i.e., vector component) of the feature vector, wherein accumulation is performed over the number of readout pulses applied with respect to the same reservoir input, e.g. with respect to the same sequence of input pulses, e.g. applied during the start time and the end time of the sequence of input pulses. Different features are associated with the accumulated readout currents of different compute nodes.

In embodiments, more than one readout pulse may be applied to the gate terminals of MOSFET-based compute nodes of the RC system with respect to at least one, e.g. each one, of the input pulses contained in the sequence of input pulses.

In another aspect, the present invention relates to a reservoir computing (RC) system comprising at least one MOSFET, associated with at least one corresponding compute node of the RC system, wherein each of the at least one MOSFET comprises a channel region between a source region and drain region, a body region adjacent to the channel region, a gate stack in contact with said channel region, a gate terminal connected to the gate stack, and a body terminal configured to apply a bias signal to the body region to control a voltage difference between the source region and the body region. Each of the at least one MOSFET is operable in a floating mode in the absence of the bias signal and in a tied mode in the presence of the bias signal, and each of the at least one MOSFET is displaying an input history-dependent threshold voltage when driven by transistor inputs in the floating mode. A control unit of the RC system is configured to selectively operate each of the at least one MOSFET in the floating mode or in the tied mode, remove a bias signal from the body terminal of each MOSFET to operate the MOSFET in the floating mode, and supply the bias signal to the body terminal of each MOSFET to operate the MOSFET in the tied mode. A driver circuit of the RC system is configured to encode a time-dependent reservoir input as a sequence of input pulses, drive the gate terminal of the at least one MOSFET with the sequence of input pulses as the transistor inputs, repeatedly generate readout pulses and apply the readout pulses to the gate terminal of the at least one MOSFET, wherein the readout pulses have a smaller voltage amplitude compared to the input pulses and the input pulses have larger voltage amplitudes compared to the threshold voltage of the at least one MOSFET. A readout unit of the RC system is configured to acquire an output sequence related to the at least one compute node while the corresponding MOSFET threshold voltage is varying. The readout unit is further configured to detect a current through the channel region of the at least one MOSFET while the driver circuit is applying the readout pulses to the gate terminal of said at least one MOSFET.

In embodiments, the driver circuit may be configured to generate the readout pulses at a subthreshold voltage amplitude relative to the MOSFET of the at least one compute node. This enables low power readout.

In embodiments, the RC system may comprise a buffer unit for buffering digital samples of a digital representation of the reservoir input, wherein the driver circuit is configured to generate individual pulses of the sequence of input pulses based on the respective digital samples in the buffer unit and apply the so generated input pulses at a predetermined rate to the gate terminal of the MOSFET associated with the at least one compute node.

In embodiments, each of said at least one MOSFET may further comprise charge trapping sites located in a gate dielectric of the gate stack, thus displaying bias temperature instability when subjected to voltage stress and threshold voltage recovery after removal of the voltage stress. In such embodiments, the driver circuit may be configured to increase the pulse amplitude of the input pulses applied during the tied mode relative to the pulse amplitude of the input pulses applied during the floating mode. This enables dual-mode operation exploiting both floating body and BTI effects.

In embodiments, the readout unit may be configured to accumulate detected currents through the channel region of the at least one MOSFET that relate to the same reservoir input. This allows formation of a feature vector from the accumulated readout currents of the respective MOSFETs.

In embodiments, the RC system may comprise a plurality of MOSFETS associated with a corresponding plurality of compute nodes and the driver circuit may be configured to drive distinct sequences of input pulses to the gate terminals of the different MOSFET-based compute nodes, wherein each sequence of input pulses is representative of a reservoir input signal associated with one of the compute nodes. The readout layer may be configured to combine the output sequences obtained for the different compute nodes into a feature vector or a series of feature vectors associated with the reservoir input.

In some embodiments, a common reservoir input signal is used to generate the input pulse sequences for all the MOSFET-based compute nodes. In other embodiments, a common reservoir input signal is weighted differently for each compute node to generate the input pulse sequences for the MOSFET-based compute nodes. In yet other embodiments, a plurality of reservoir input signals are used to generate the input pulse sequences for the plurality of MOSFET-based compute nodes.

In embodiments, the RC system may further comprise a delay line between the readout unit and the at least one MOSFET, and a masking unit configured to apply a periodic masking sequence to each reservoir input to obtain a masked reservoir input, wherein the driver circuit is configured to encode the masked reservoir input as the sequence of input pulses. This implements time-multiplexing of the virtual nodes in a virtual-node based RC system.

It is an advantage of embodiments of the present invention that reservoir computing can be implemented using standard CMOS or SOI technologies, thereby eliminating the need for non-standard devices with non-standard materials and facilitating easier integration with existing processes at reduced costs.

It is an advantage of embodiments of the present invention that by exploiting the floating body effect in bulk MOSFETs, the reservoir computer exhibits less stochastic behavior compared to approaches based on Bias Temperature Instability (BTI), resulting in more reproducible results and improved performance in applications such as gait authentication.

It is a further advantage of embodiments of the present invention that no post-processing may be required for reservoir outputs produced by MOSFET-based compute nodes in the floating mode. Feature vectors can be constructed simply by accumulating the drain current outputs from the different transistors. This simplifies the data processing pipeline and enhances efficiency.

It is an additional advantage of embodiments of the present invention that it offers flexibility in operation by allowing easy switching between the floating body effect and the BTI effect within a single transistor device through biasing, e.g. grounding, the body terminal or leaving the body terminal and connected body region floating. This improves the system's versatility and adaptability to different computational needs.

Moreover, it is an advantage of embodiments of the present invention that the floating body effect requires less energy than BTI-based approaches because a small voltage amplitude is sufficient to accumulate charges in the body, leading to energy-efficient operation suitable for low-power applications.

It is also an advantage of embodiments of the present invention that a single standard CMOS or SOI transistor can achieve reservoir computing functionality, enabling a very compact and resource-friendly implementation without the necessity for specially designed or processed devices, which is beneficial for integrating reservoir computing into a wide range of electronic systems.

Furthermore, it is an advantage of embodiments of the present invention that the floating body effect promotes consistent behavior with typically two time constants, in contrast to the numerous time constants and stochastic nature of BTI, thereby enhancing the reliability and predictability of the reservoir computer's operation.

Additionally, it is an advantage of embodiments of the present invention that the selected readout conditions perturb the system less and the nonlinear change in drain current is well-suited for reservoir computing, with ultra-low energy consumption characterized by typical drain current levels around 10 nA, making it highly energy-efficient and suitable for ultra-low-power applications.

Compute nodes in accordance with embodiments of the invention are inherently provided with short-term memory. Hence, less compute nodes are required in embodiments of the invention compared to the large compute node networks in traditional reservoir computing systems. In some embodiments of the invention, reservoir computing methods can be performed with as little as one single compute node.

It is an advantage of embodiments of the invention that no randomized connections between compute nodes of the reservoir are needed, which are difficult to implement in hardware.

It is a further advantage of embodiments of the invention that MOSFETs as compute nodes provide nonlinearity in their outputs. The readout currents of MOSFETs operated in or near the subthreshold regime depend in a highly nonlinear manner on the immediate threshold voltage of the transistor, which is subjected to shifts because of the floating body effect or the BTI effect.

Embodiments of the invention using write pulses of constant voltage amplitude have the additional advantage that no dedicated analog electronic circuit needs to be designed for the compute node.

It is an advantage of embodiments of the invention that temporal information evolving at very different timescales can be processed when the MOSFET devices are operated in the BTI mode. Time series or time sequences as input signals can be sampled at different speeds and processed, e.g. sampling time intervals ranging from nanoseconds to hours or days. This is a consequence of the broad spectrum of time constants present in the decay characteristics of threshold voltage excursions under the BTI effect.

In yet another aspect, the present invention relates to a reservoir computing method comprising the steps of: providing a pulse wave representation of a time-dependent reservoir input, said pulse wave representation comprising a sequence of input pulses; providing a MOSFET as a compute node of a reservoir computing system. The MOSFET comprises a channel region between a source region and drain region, a body region adjacent to the channel region, a gate stack in contact with the channel region, and a gate terminal connected to the gate stack, but no body terminal for biasing the body region and controlling a voltage difference between the source region and the body region of the MOSFET. The MOSFET is thus always configured to operate in the floating mode, and is displaying an input history-dependent threshold voltage when driven by the sequence of input pulses in the floating mode. The method further comprises the steps of: applying the sequence of input pulses to the gate terminal of the MOSFET, each input pulse having a voltage amplitude larger than the threshold voltage of the MOSFET, thus causing input history-dependent variations in the threshold voltage; acquiring an output sequence related to the compute node while the MOSFET threshold voltage is varying, by repeatedly applying readout pulses to the gate terminal of the MOSFET and simultaneously detecting a current through the channel region of the MOSFET, said readout pulses having a smaller amplitude compared to the input pulses.

Similarly, the present invention also relates, in a further aspect, to a reservoir computing (RC) system comprising at least one MOSFET, associated with at least one corresponding compute node of the RC system, wherein each of the at least one MOSFET comprises a channel region between a source region and drain region, a body region adjacent to the channel region, a gate stack in contact with said channel region, and a gate terminal connected to the gate stack, but no body terminal configured to apply a bias signal to the body region to control a voltage difference between the source region and the body region. Each of the at least one MOSFET is thus operable in the floating mode only, because of the absence of the bias signal. Each of the at least one MOSFET is displaying an input history-dependent threshold voltage when driven by transistor inputs in the floating mode. A driver circuit of the RC system is configured to encode a time-dependent reservoir input as a sequence of input pulses, drive the gate terminal of the at least one MOSFET with the sequence of input pulses as the transistor inputs, repeatedly generate readout pulses and apply the readout pulses to the gate terminal of the at least one MOSFET, wherein the readout pulses have a smaller voltage amplitude compared to the input pulses and the input pulses have larger voltage amplitudes compared to the threshold voltage of the at least one MOSFET. A readout unit of the RC system is configured to acquire an output sequence related to the at least one compute node while the corresponding MOSFET threshold voltage is varying. The readout unit is further configured to detect a current through the channel region of the at least one MOSFET while the driver circuit is applying the readout pulses to the gate terminal of said at least one MOSFET.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, in which:
FIG. 1 shows a reservoir computing system according to a first embodiment.
FIG. 2 is a schematic cross-section through a compute node MOSFET in accordance with embodiments of the invention, wherein the MOSFET is configured in the tied mode.
FIG. 3 shows the floating mode configuration of the compute node MOSFET of FIG. 2.
FIG. 4 shows a pulse train associated with an input pulse sequence that is applied to the gate terminal of compute node MOSFETs in accordance with embodiments of the invention.
FIG. 5 shows the electrical I-V behavior for different threshold voltage shifts of a compute node MOSFET in accordance with embodiments of the invention.
FIG. 6 illustrates the dynamic response of a foundry bulk planar MOSFET, driven by a pulse train representing a reservoir input.
FIG. 7 is a schematic cross-section through a compute node MOSFET in accordance with alternative embodiments of the invention.
FIG. 8 shows a reservoir computing system according to a second embodiment.
FIG. 9 shows a reservoir computing system according to a third embodiment.
FIG. 10 shows a multi-node reservoir computing system according to a fourth embodiment.
FIG. 11 illustrates steps of a reservoir computing method performed by a reservoir computing system in accordance with embodiments of the invention.
FIG. 12 shows characteristic ac responses of the body potential and drain current of the NMOS device to a voltage step increase and decrease, in accordance with embodiments of the invention.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings, but the invention is not limited thereto but only by the claims.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some, but not other features included in other embodiments, combinations of features of different embodiments are meant to be within the scope of the invention, and form different embodiments, as would be understood by those in the art.

In the description provided herein, numerous specific details are set forth. However, it is understood that embodiments of the invention may be practiced without these specific details. In other instances, well-known methods, structures and techniques have not been shown in detail in order not to obscure an understanding of this description.

In the context of the present invention, reservoir computing relates to an unconventional computing method which uses a nonlinear physical system - referred to as the reservoir or reservoir layer - to map input signals to a state space for subsequent computation. Typically, feature vectors of the reservoir layer are derived from the state space representation of a reservoir input. A state space associated with the reservoir layer often is high-dimensional, e.g. has more dimensions than the number of input dimensions. The input signals are time-dependent signals that continuously disturb the nonlinear physical system, driving it away from a stable point into a transient regime. Subsequent computation generally comprises training the parameters of a readout layer in order to perform signal recognition, classification or prediction tasks, or generate rhythmic output patterns. The transient signals from the reservoir serve as observations (training data) for the training of the readout layer. A reservoir typically comprises one or multiple nonlinear units, hereinafter referred to as nonlinear compute nodes.

The transient computing aspect of reservoir computing systems is well known. Reservoir computing systems are dynamical, generally nonlinear systems which are operated away from equilibrium, e.g. at non-steady-state conditions. Obviously, meaningful readout signals are obtained if the readout pulses are applied while the MOSFET-based compute nodes of the reservoir computing system are in the transient regime.

Another known aspect of reservoir computing systems is the "fading memory" property, which means that the reservoir state, i.e. the instant threshold voltage of each MOSFET-based compute node, depends on the inputs, i.e. write pulses, from the recent past but is independent on inputs from the far past. In other words, the reservoir has a constant tendency to forget about its remote history and certainly about its initial conditions. Technically, the reservoir response signal x(t) at time t is uniquely defined by the fading history of the input sequence u(t), and not by the initial conditions of the reservoir x(0). Although reservoirs can be operated at the "edge of chaos", they do not exhibit chaotic behavior. In that sense, reservoirs differ from truly chaotic systems in which a little perturbation of the input can have dramatic consequences on the system state. Reservoir computing systems, as opposed to chaotic systems, remain predictable.

A range or distribution of relaxation time constants associated with the MOSFET's threshold recovery dynamics "spanning multiple decades" means that this range or distribution of relaxation time constants increases by multiple factors of ten, such as 0.1-10, 1-100, and 10-1000, which is in agreement with the ordinary technical meaning of "decade". In other words, the range of relaxation time constants associated with the MOSFET's threshold recovery dynamics is such that the ratio of the longest relaxation time constant to the shortest is a multiple of ten.

Regarding the higher-dimensional state space for subsequent computation, various ways of obtaining feature vectors representative of the reservoir state exist. In single node reservoir systems, the different readouts over time, e.g. the reservoir response sequence x[k], may be organized into a feature vector. For instance, each item of the response sequence may be used as a different entry/component of the feature vector, whereby a high-dimensional feature vector is obtained. In embodiments of the invention, the current measurements with respect to the different readout pulses may be arranged into a feature vector.

Furthermore, input masking techniques are known in the art that create many virtual nodes for reservoirs that consist of a single physical node. The physical node is a spatial node in which the nonlinearity resides, while the virtual nodes are temporal nodes based on time-multiplexed inputs using different mask weights. The nonlinearity and fading memory at the spatial node couples neighboring virtual nodes. A high-dimensional feature vector can be obtained by reading out the reservoir response signal for each virtual node and arranging the virtual node signals into a feature vector. For feedback loops including the spatial node, time-averaging of the virtual node readouts obtained over many loop roundtrip times may be performed. In embodiments of the invention, a single MOSFET-based compute node may be selected as the spatial compute node and input masking may be used to create many temporal/virtual nodes, which can be read out separately to obtain the high-dimensional feature vector.

Eventually, the reservoir response in many-node (spatial node) reservoirs may be read out at each spatial reservoir node over time. The response sequences of the different reservoir nodes can be concatenated into a high-dimensional feature vector. Alternatively, the reservoir response may be read out at each spatial node and accumulated or averaged over time. The accumulated or time-averaged readout signals for the different spatial nodes can be used as entries/components of a high-dimensional feature vectors. In embodiments of the invention, multiple compute nodes of the reservoir computing system may be based on MOSFETs and the readout current measurements obtained for the MOSFET-based compute nodes may be assembled into the high-dimensional feature vector, optionally accumulating or averaging the current measurements of each MOSFET-based compute node over time.

As used herein, and unless otherwise specified, the expression "pulse wave representation of a time-dependent reservoir input" refers to a sequence of electrical pulses that encode the temporal variations of an input signal. Each pulse in the sequence corresponds to a specific point or interval in time, effectively converting the time-dependent input into a series of discrete pulses. Examples include transforming an analog signal into a digital pulse train where pulse timing, width, amplitude, or combinations thereof represents the input signal's information.

In one aspect, the present invention relates to a reservoir computing system for the processing of temporal information, which comprises at least one nonlinear MOSFET-based compute node. Here temporal information generally relates to any kind of time-dependent signal, continuous-time or discrete-time signals, which can be expressed as a time series, time sequence or data stream. This includes static spatial data such as images or video frames that have been serialized into a data stream, e.g. bit stream representative of the pixels from a raster scan of the image or video frame.

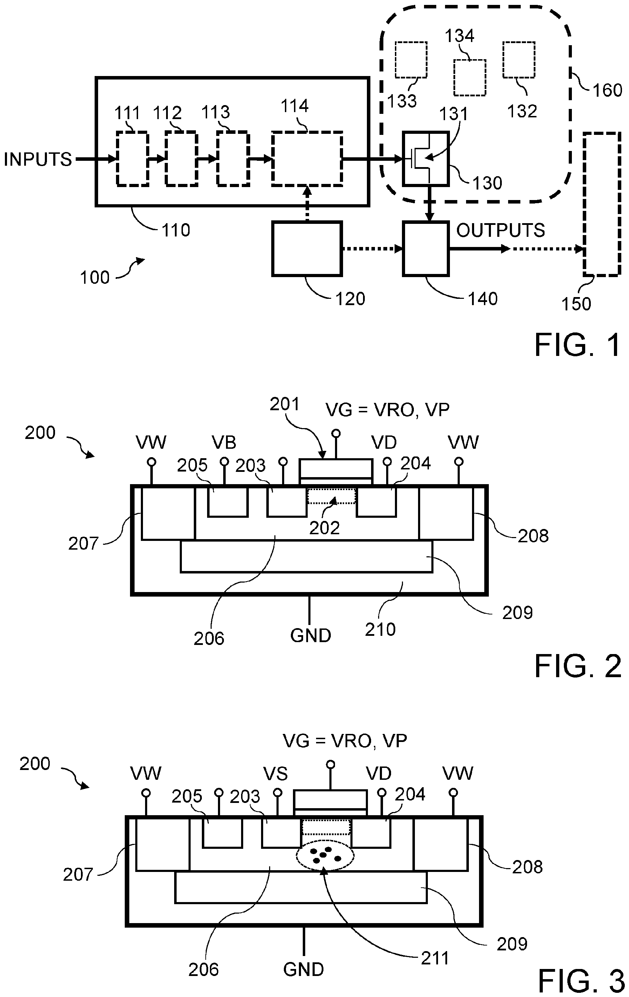

FIG. 1 shows a reservoir computing system 100 according to a first embodiment. The reservoir computing system 100 comprises a nonlinear compute node 130, a driver circuit 110 coupled to the nonlinear compute node 130, a readout unit 140 coupled to the nonlinear compute node 130, and a control unit 120 coupled to the driver circuit 110, the MOSFET compute node 130, and the readout unit 140. Compute node 130 comprises or consists of metal-oxide semiconductor field-effect transistor 131 (MOSFET). The reservoir computing system 100 may be a single-node system, e.g. comprising the MOSFET compute node 130 as the only reservoir node, or a multi-node system, e.g. comprising the MOSFET compute node 130 among other compute nodes 132 through 134 (MOSFET-based or not). The compute nodes of the reservoir system are associated with an information-processing reservoir layer 160.

The control unit is configured to select the driving circuit's mode of operation through appropriate control signals, which can be toggled between a write mode and read mode. Additionally, control unit 120 is configured to selectively operate the MOSFET 131 in the floating mode or the tied mode, by removing a bias signal from or supplying the bias signal to a body terminal of MOSFET 131 respectively.

An output of the driver circuit 110 is coupled to a gate terminal of a compute node MOSFET 131, and the readout unit 140 is connected to one of the source/drain terminals of the compute node MOSFET 131. Driver circuit 110 receives time-dependent signals (e.g., time series, temporal data sequence or time-varying data stream) as system inputs and, when operated in the write mode, is configured to encode the system inputs into a pulse sequence, e.g., a digital representation of the input data by means of pulses in a pulse wave or a pulse-based digital representation of features extracted from the input data. Existing pretrained feature extractors can be used to extract a set of features from the input data, or even fine-tuned for their particular use with MOSFET-based compute nodes. If required, the driver circuit 110 samples the reservoir input signal to obtain a digital representation of the reservoir input signal. The digital samples can then be encoded into individual pulses or pulse streams. Pulses of the sequence of input pulses are also referred to as write pulses.

Furthermore, the driver circuit 110 is adapted to generate voltage pulses in accordance with the pulse-encoded input data and deliver the generated voltage pulses to the gate of the compute node MOSFET 131, when operated in the write mode. Conversely, the driver circuit 110 is configured to repeatedly generate a readout pulse at regular time intervals, when operated in the read mode. For instance, the driver circuit 110 may be configured to generate each readout pulse such that it falls between two consecutive write pulses, or generate a new readout pulse after a predetermined number of write pulses has been applied to the gate terminal of MOSFET 131. If write pulses are applied at specific time steps associated with the pulse-wave representation of the reservoir input, e.g. sampling time steps corresponding to a discretization process of the reservoir inputs, then the driver circuit 110 may generate a readout pulse after a predetermined number of time steps, e.g. at the end of each time step. Moreover, the generation of a new readout pulse by the driver circuit 110 may be triggered by an interrupt signal from the control unit 105, which toggles the driver circuit 110 modus operandi from the write mode to the read mode to suspend the generation and delivery of write pulses and initiate the creation and delivery of a readout pulse. The driver circuit 110 may be configured to apply each write pulse during a write time interval to the gate terminal of MOSFET 131 and apply each readout pulse during a readout time interval to the gate terminal of MOSFET 131. A write time interval, in embodiments of the invention, may be in the millisecond range. It is possible to configure the driver circuit 110 to apply several consecutive readout pulses (e.g., readout pulse train) during the readout time interval instead, which can be beneficial for readout noise reduction. Once the readout pulse or readout pulse train has been supplied to MOSFET 131, the driver circuit 110 toggles back to the write mode to initiate the generation and delivery of the following write pulse.

The voltage amplitude of input pulses is selected to always exceed the immediate threshold voltage of the compute node MOSFET 131, so that the MOSFET is switched on and the threshold voltage starts shifting due to the floating body effect effect. This can be ensured by raising the write pulses to a high enough voltage level 'VP' that is larger than the expected maximum for the shifted threshold voltage under the floating body effect. For instance, the write pulse voltage amplitude 'VP' can be set to the pristine threshold voltage of MOSFET 131, Vth0, which is the equilibrium threshold voltage of MOSFET 131 in the absence of any inputs. This is possible because the accumulation of the majority charge carriers in the floating body region during MOSFET compute node operation tends to increase the body-to-source voltage difference and decrease the magnitude (absolute value) of the threshold voltage. Compared to the readout pulses, a voltage amplitude and/or duration of the input pulses is larger.

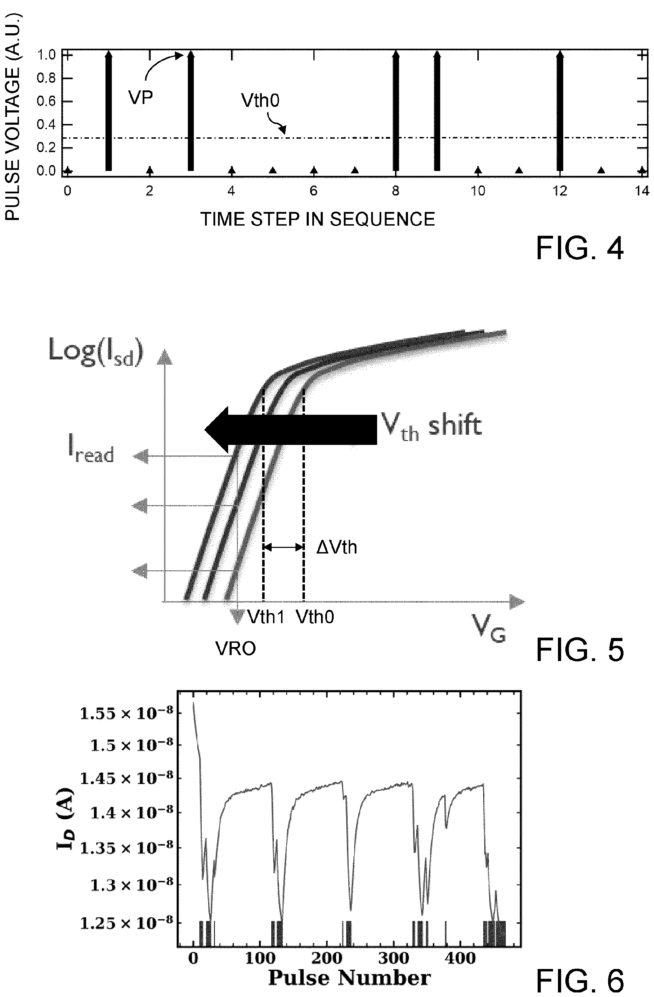

Briefly referring to FIG. 4, the time-dependence of the input voltage to the compute node MOSFET, e.g. the gate voltage applied to the MOSFET's gate terminal, is shown. The pulse train corresponds to a portion of the full input pulse sequence. The sequence of input pulses of this example is a time-discrete sequence, where individual input/write pulses are applied at well-defined time steps, e.g. time steps t= 1, 3, 8, 9 and 12 for the present sequence. The input voltage at the MOSFET gate is raised to HIGH (positive for NMOS devices, negative for PMOS devices) during write pulse application and reduced to LOW during time intervals with no inputs, e.g. period between consecutive write pulses. The HIGH level corresponds to the voltage amplitude 'VP' of the applied write pulses and the LOW level is chosen as 0 V. As indicated, the HIGH level exceeds the equilibrium threshold voltage level 'Vth0' of the MOSFET device.

Referring again to FIG. 1, the driver circuit 110 may generate readout pulses that have a voltage amplitude smaller than or slightly above the threshold voltage of the computer node MOSFET 131, e.g. smaller than or slightly above the minimum attainable threshold voltage of the computer node MOSFET 131. This allows for a substantial reduction in the amount of readout current flowing through the channel of the compute node MOSFET 131 and leads to energy savings. This is particularly the case if readout pulses have a voltage amplitude below the threshold voltage of the compute node MOSFET 131 such that the MOSFET 131 is operated in the subthreshold regime.

In the present embodiment, the driver circuit 110 comprises a sampling unit 101, a sample buffer 102, an encoder unit 103, and a pulse generator unit 104 as subcomponents, but such a distinction may not be necessary in alternative embodiments. The encoder unit 103 is configured to encode the reservoir inputs as digital pulse trains and the pulse generator unit 104 is configured to drive the compute node MOSFET 131 in accordance with the digital pulse trains when the compute node 130 is operated in the write mode, e.g., by generating a corresponding sequence of voltage pulses and applying the individual voltage pulses to the gate terminal of the compute node MOSFET 131. During the read mode, the pulse generator unit 104 is configured to generate one or more readout pulses at the corresponding readout voltage level and apply the readout pulses to the gate of the compute node MOSFET 131.

In alternative embodiments of the invention, a separate pulse generator or drive circuit may be provided in addition to the drive circuit 110, as a means for supplying the readout pulses in the readout mode. In embodiments of the invention in which the reservoir inputs are already supplied in the form of a pulse train, the encoder unit 103 may be omitted or bypassed. The readout mode can be triggered repeatedly by control unit 120 at regular time intervals, e.g. through a read interrupt signal that is generated if a clocked counter reaches a predetermined number of counts. Hardware implementations of the driver circuit include but are not limited to existing control circuitry for pulse-width modulation and/or pulse-code modulation.

Time-dependent information contained in the system inputs may be encoded into at least one of the following variables characterizing the pulse sequence: pulse amplitude, pulse duration, pulse interval, pulse position, pulse shape (e.g. triangular vs. trapezoidal), or pulse density. In some embodiments of the invention, the time-dependent information is encoded into multiple variables of the pulse sequence, e.g. pulse amplitude and pulse duration. An encoding scheme with constant write pulse amplitude is preferable for digital implementations. However, encoding schemes that use pulse amplitude modulation in conjunction with analog driver circuits are feasible too. The magnitude of system input data points is then represented, fully or partially, by the amplitude of the write pulses.

To obtain a plurality of digital samples associated with a digital representation of the reservoir inputs, continuous-time signals may be sampled and quantized, or discrete-time signals resampled, by the sampling unit 101 of driver circuit 110. Alternatively, separate sampling and/or quantizer units may be provided. For supporting the quantization of analog reservoir input signals, the sampling unit 101 may also be equipped with an analog-to-digital converter. The digital samples may be temporality stored in the sample buffer 102, prior to the translation into a pulse sequence. This means that samples representative of the reservoir input signals can be read and removed individually from the sample buffer, be encoded in accordance with the pulse-wave representation (pulse encoding step) and the corresponding write pulse or write pulse series be generated at a pulse delivery rate that potentially differs from a reservoir input rate or reservoir input sampling rate. This is useful when application-dependent (sampling) rates of the reservoir input signals need to be matched with the characteristic time scales of the compute node MOSFET, e.g. the relaxation time constants associated with the decay of the floating body potential.

The readout unit 140 is configured to detect a current through the channel region of the compute node MOSFET 131 while the driver circuit 110 is applying the readout pulses to the gate terminal of the compute node MOSFET 131, e.g. during the read mode. A readout cycle can be initiated by an interrupt signal that is issued by the control unit 120. Under the repeated current measurements, the readout unit 140 acquires an output sequence related to the at least one nonlinear compute node 130. This output sequence corresponds to the processed version of the reservoir input signal, the processing being performed by the nonlinear electrical characteristics of the compute node MOSFET 131. These nonlinear MOSFET characteristics depend directly on the amount of threshold voltage shift and, by virtue of the threshold voltage shift dependence on the switching history, indirectly also on the input history. During the readout cycle, the compute node MOSFET 131 experiences insignificant amounts of voltage stress, or no voltage stress at all. Hence, the immediate threshold voltage of the compute node MOSFET 131 remains nearly unaffected or does not shift at all. Hardware implementations of the readout unit include but are not limited to existing circuitry for current sensing, e.g., current sense amplifiers. Alternatively or additionally, the readout unit 140 may also comprise a current-to-voltage converter (e.g. transimpedance amplifier) and/or an analog-to-digital converter. Hence, the output sequence obtained by the readout unit may be a current or a voltage signal, in the digital or analog domain.

The output format, e.g. current vs. voltage and digital vs. analog, may be determined in accordance with the requirements of any optional neural network layer 150 such as a readout layer or hidden layer of a subsequent neural network. Typical readout layers for RC systems include the linear regression layer, ridge regression layer, logistic regression layer, etc. The data points of the output sequence - as computed by the nonlinear compute node in response to the system input signal - are the components of a state space vector of the reservoir computing system. This state space vector can be interpreted as a higher-dimensional feature vector in the reservoir computing space. Output sequence can be output directly or are optionally subjected to further processing. e.g., be time-averaged with respect to each reservoir input sequence and/or used as inputs to a readout layer or hidden neural network layer.

FIG. 2 is a schematic cross-section through a compute node MOSFET in accordance with embodiments of the invention. The CMOS-type MOSFET 200 comprises a channel region 202 between a source region 203 and a drain region 204, and a body region 206 adjacent to the channel region. A gate stack 201 is formed over the channel region 202 and extends between the source and drain region 203, 204. In the present example, the MOSFET 200 has a top-gate configuration, which means that the gate stack 201 contacts channel region 202 from the top and body region 206 is situated underneath channel region 202. A conductive channel (surface channel or buried channel) is induced in channel region 202 if a gate voltage 'VG' is applied to the gate terminal, which exceeds a threshold voltage 'Vth' associated with the MOSFET. Write pulses of the sequence of input pulses with pulse amplitude VP > Vth are supplied to the gate stack 201 via the gate terminal. A drain current starts flowing through the conductive channel and can be measured at the drain terminal of the MOSFET if a voltage is applied across the conductive channel, e.g. if the drain voltage 'VD' at the drain terminal is larger than the source voltage 'VS' at the source terminal of the MOSFET. For instance, VD = 50 mV and VS = 0 V. Typically, the source voltage is fixed to the ground signal level (GND) in NFET devices, e.g. VS = GND = 0 V, and to HIGH level (Vdd) in PFET devices. A small amount of sub-threshold current can still be detected at the drain terminal if the gate voltage is low relative to the threshold voltage. In embodiments, readout pulses with amplitudes VRO < Vth may be supplied to the gate stack 201 via the gate terminal to operate the MOSFET 200 in the sub-threshold regime.

A body contact region 205 forms part of a body terminal and is adapted to bias the body region 206 through the application of a body bias voltage 'VB'. The transistor body region 206 is electrostatically isolated from the chip substrate 210, the latter typically being connected to the ground level potential 'GND' as back-gate voltage signal. In accordance with embodiments of the invention, the body bias voltage 'VB' can be applied and removed in a controlled manner. In the first case, corresponding to the tied mode operation of the MOSFET, the application of a well-defined body bias voltage allows fixing a voltage difference between the body region and the source region of the MOSFET. FIG. 2 shows the tied-mode configuration of the MOSFET. In the latter case, corresponding to the floating mode operation of the MOSFET, the absence of the body bias voltage leaves the body region of the MOSFET in a floating condition and the voltage difference between the body region and the source region is allowed to fluctuate. Pulses at gate 201 of the transistor lead to accumulated charges 211 in the floating body region 206 when the MOSFET is operated in the floating mode. FIG. 3 shows the floating mode configuration of MOSFET 200. The charge accumulation in the floating body region then causes threshold voltage shifts, ΔVth, and drain current drifts of the transistor. As the floating body 206 can retain charge from previous operations, e.g. switching events, an input history effect is observable where the current state of the transistor is influenced by its prior states. In some embodiments, a parasitic bipolar transistor operation between the drain, body and source regions may be induced by the raised body potential (parasitic BJT effect). In such embodiments, the parasitic BJT effect can contribute to and enhance the floating body effect.

In the present example, the transistor 200 is an NFET, and thus includes an N-well architecture formed by a deep N-well 209 implanted into the P-substrate 210 and connected to two lateral N-wells 207, 208. This N-well architecture surrounds and electrostatically isolates the transistor body region 206, a P-well, from the chip substrate 210. A well-voltage 'VW' may be applied to N-well terminals to bias the N-well regions 207, 208. For instance, VW = 2,2 V. Nonetheless, the floating body effect can also be exploited in a PFET device, in which the N-well architecture is unnecessary.

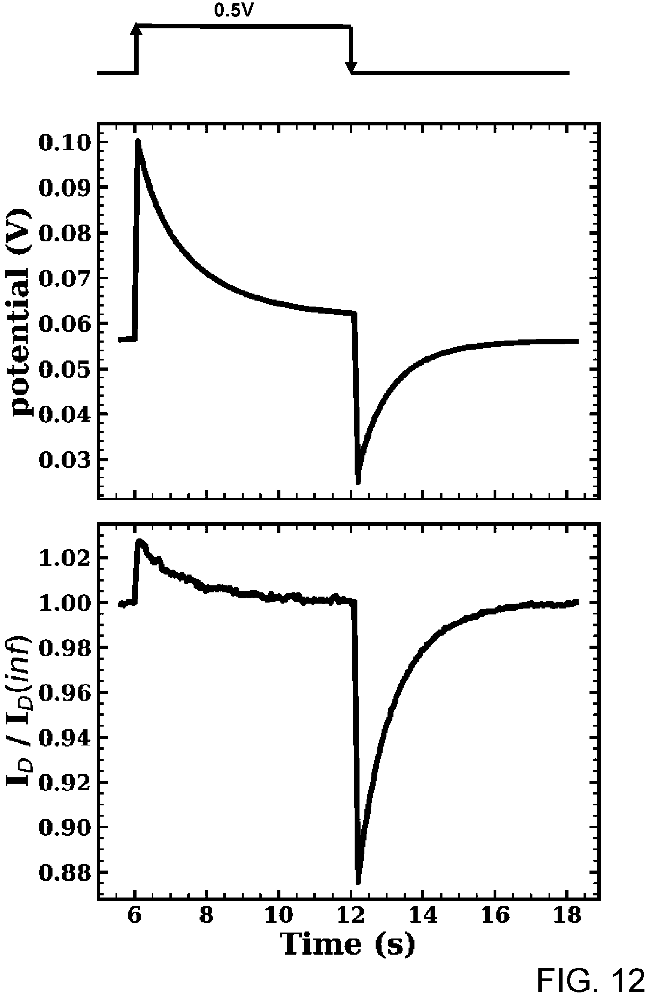

The decrease of the MOSFET threshold voltage from Vth0 (zero input equilibrium value) towards a new equilibrium value Vth1 and the resulting increase in the drain current 'Isd' at different dc input voltages (sustained inputs) is graphically represented in FIG. 5 for an NMOS-FET device. More specifically, the electrical I-V behavior of the compute node MOSFET under dc conditions is shown for three different values of the threshold voltage. The abscissa indicates the gate voltage (arbitrary units) and the ordinate the source-drain current 'Isd' flowing through the MOSFET channel region (log-scale; arbitrary units). All three curves reveal a sharp increase in the conducted source-drain current when the applied gate voltage 'VG' approaches the immediate threshold value and an onsetting saturation of the source) drain current above the threshold voltage. The increased current flow through the MOSFET channel is accompanied by an increase in the conductance of the MOSFET; the MOSFET is switched from a low conductance state to a high conductance state. In the context of the present invention, a voltage pulse that induces the switching from the low conductance state to the high conductance state is also referred to as a write pulse or switching pulse. Reducing the gate voltage below the immediate threshold voltage 'Vth', the source-drain current magnitude decreases exponentially fast. It is noted that under ac conditions, e.g. when switching the MOSFET gate terminal to HIGH, the capacitive coupling between the body region and the gate typically causes an overshoot (sudden rise) of the body voltage, which is followed by a charge recombination-based transient during which the body potential adjusts to its new (quasi-) equilibrium value. Likewise, an undershoot of the body potential occurs due to capacitive coupling, when the MOSFET gate terminal is switched back to LOW again, followed by a charge generation-based transient. The overshoot or undershoot of the body potential gives rise to a noticeable surge or drop of the drain current. Characteristic ac responses of the body potential and drain current of the NMOS device to a voltage step increase and decrease are shown in FIG. 12. The floating body can retain charge from previous operations, resulting in a history effect where the current state of the transistor is influenced by its prior states. Gate tunneling currents, if present, may influence the (quasi-) equilibrium value of the floating body region.

FIG. 5 further illustrates the possibility of detecting drain currents in the sub-threshold region of the transistor, during readout pulse application. For a same readout pulse voltage 'VRO' at the transistor gate, a variation of the detected drain current 'Isd' is representative of a corresponding change in the transistor state, e.g. the threshold voltage shift. In the subthreshold region, the MOSFET only conducts a very small amount of leakage current through the channel region, e.g. less than 10 nA, e.g. less than 1 nA, e.g. between 1 nA and a few picoamperes. The accumulated charge in the floating body region of the MOSFET device determines the magnitude of the source-drain current in the readout mode through the present threshold voltage. However, even a small shift in the MOSFET's threshold voltage causes a substantial change in the amount of subthreshold current that is detected during the readout operation. Therefore, history-dependent changes in the threshold voltage of the compute node MOSFET enhance the nonlinear output behavior of the compute node and enable the separation of different system input signals even if the differences are small. The precise value of the readout voltage 'VRO' depends on the details of the MOSFET as well as the speed and sensitivity requirements of the readout unit, which may vary from application to application. A typical readout current 'Iread' would be in the nanoampere range, e.g. ~10 nA.

FIG. 6 illustrates the dynamic response of a foundry bulk planar MOSFET driven by a pulse train associated with a sequence of write pulses representing a reservoir input. The compute node MOSFET operates in floating mode, e.g. its body is floating. Black bars along the horizontal axis designate time intervals during which input/write pulses are applied and the input voltage at the MOSFET gate is driven HIGH. Every time a HIGH voltage write pulse ends, the drain current first drops drastically and then recovers gradually towards a new equilibrium level. Readout pulses are applied at each time interval, e.g. for each pulse number along the horizontal axis. The detected drain current with respect to each readout pulse is reported on the vertical axis. They constitute the sequence of readout currents that are obtained as the output of the MOSFET-based compute node. Due to the floating body effect, the transistor threshold voltage changes in response to each input pulse, which leads to a change in the drain current. In between two consecutive input pulses, the input voltage at the MOSFET gate is set LOW again, which causes the slow recovery of the threshold voltage and related drain current. In the present example, the HIGH level associated with the pulse amplitude of input pulses equals 0,5 V and the LOW level (no input pulses) is 0 V. Readout pulses are applied with pulse amplitudes of 0,2 V. Compared to FIG. 5, the MOSFET device of FIG. 6 is operated in the transient regime for most of the time, meaning that input pulses are too short in duration to have the MOSFET threshold voltage and drain current settle to a new steady-state value and, at the same time, input pulses are applied too frequently to let the MOSFET threshold voltage and drain current relax and stay at their equilibrium values (absence of inputs) for extended periods of time. In the transient regime, the MOSFET device is repeatedly subjected to varying inputs that constantly disturb the dynamic state of the MOSFET and keep the compute node MOSFET in non-equilibrium conditions.

In embodiments of the invention, the compute node MOSFET may exhibit the BTI effect in addition to the floating body effect. The BTI effect is typically much weaker than the floating body effect, e.g. the readout current variations resulting from the BTI effect are small compared to the readout current variations observed for the floating body effect. To observe the BTI effect, the compute node MOSFET is operated in the tied mode, in which the body potential is fixed by connecting the body terminal to a well-defined voltage signal 'VB', typically the source voltage level 'VS', e.g. VB = VS = GND = 0V. In embodiments in which the MOSFET device exhibits the BTI effect during tied mode operation, the tied mode is also referred to as BTI mode.

During each switching cycle, the MOSFET operating in the BTI mode is subjected to voltage stress and defect sites in the gate dielectric are trapping mobile charge carriers that are attracted from the channel region below. In between successive switching cycles, at least some of the trapped charges are released and the charged defect sites become neutral again, thereby causing the relaxation of the threshold voltage, which means that the value of the threshold voltage, while relaxing, is drifting as a function of time as the MOSFET. During relaxation time intervals, the MOSFET is not subjected to any above threshold voltage stress. At the end of each relaxation time interval, the threshold voltage of the MOSFET will have moved to a new immediate threshold voltage level 'Vth', just before it is being increased again by the next write pulse. For the MOSFET, a decrease of the threshold voltage towards its initial value is observed with increasingly long relaxation time intervals. Interestingly, threshold voltage relaxation is observable over a wide spectrum of relaxation time intervals, e.g., reaching from short time intervals of a few nanoseconds to longer time intervals in the millisecond and second range and up to very long time intervals ranging from hours to days and even months. In other words, the timescales of the threshold voltage relaxation dynamics span many decades. This has the advantage that as-fabricated MOSFETs can process input data sequences that have very different timescales. Furthermore, the relaxation dynamics of the threshold voltage are also dependent on cycling history, i.e. the number, timing and duration of write pulses of the recent past.

Although the BTI effect is a stochastic phenomenon, which causes both inter-device (i.e., different BTI-inducing defects and associated different time constants of two nominally-identical transistors) and intra-device (actual capture/emission times of set of defects in a given device are random) randomness, the richer threshold voltage dynamics associated with the BTI effect may give rise to better processing performance compared to the floating body mode if the reservoir input signals are complex, e.g. involve a multiplicity of different time scales. Moreover, the use of a buffer unit to match the time scales of the compute node MOSFET with the reservoir inputs is not necessarily required in the BTI mode.

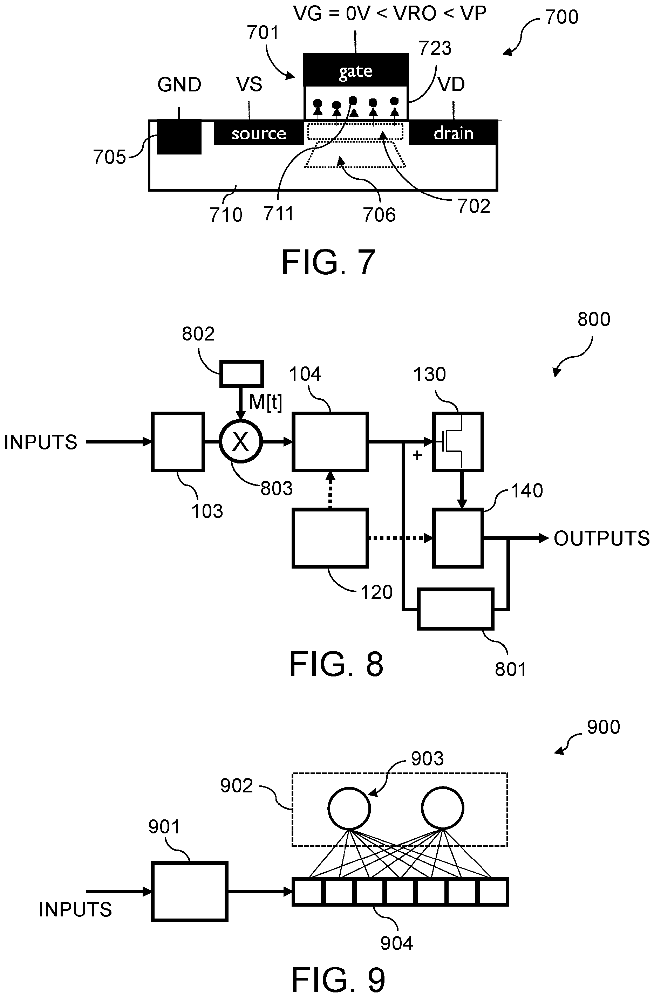

FIG. 7 is a schematic cross-section through a compute node MOSFET 700 in accordance with some embodiments of the invention. The MOSFET 700 comprises source and drain regions and related contact terminals, a channel region 702, and a gate stack 721 formed over the channel region 702. In the inversion regime, the application of gate voltage 'VG' exceeding the transistor threshold voltage 'VT' induces a conductive channel in channel region 702. The conductive channel may be located adjacent to the interface with the gate stack 721 or may be buried in substrate 710. A body region 706 extends below channel region 702 and, if left floating during floating mode operation of the MOSFET, accumulates and leaks charges that cause the body potential to vary dynamically. Body contact 705 is part of a body terminal through which the body potential can be fixed during tied mode operation, e.g. by applying a ground voltage level 'GND' to the body terminal contact 705.

Furthermore, the MOSFET device 700 is operable in the BTI mode because the compute node MOSFET 700 is subjected to the bias temperature instability effect under applied voltage stress and experiences threshold voltage recovery after removal of the voltage stress. Charge trapping sites 711 are localized defects in the gate dielectric 723 of the gate stack 701, e.g. localized defects within the volume of the gate dielectric and/or at the interface between the gate dielectric and the substrate, which lead to the capture and re-emission of charges at the trapping sites, thus causing the BTI effect. Individual trapping sites have associated charge capture and emission rates, which differ from trapping site to trapping site, e.g. are dependent on the position in the gate dielectric as well as on the structural properties of the site. Each trapping site contributes to a spectrum of relaxation time constants which characterizes the threshold voltage recovery dynamics of the MOSFET operated in the BTI mode. The relaxation time constants associated with the ensemble of trapping sites/defect are distributed over a range of time scales that spans multiple decades, e.g. relaxation time constants and associated time scales differing by at least a factor of ten. The range of relaxation time constants may comprise multiple orders of magnitude. The wide time scale range typically stems from the amorphous nature of the gate dielectric, e.g. an oxide. Here, a multiple decade spanning relaxation spectrum may range from nanoseconds or microseconds to seconds, hours and even months, e.g. encompass six decades or more, e.g. ten decades or more, e.g. twelve decades or more.

In embodiments of the invention, pulse amplitudes and/or durations preferably are chosen small enough to prevent or minimize any permanent damage of the gate dielectric of the MOSFET and hence any permanent shift of the threshold voltage. Nonetheless, an initially and/or regularly performed calibration step also allows cancellation of any persistent shifts in threshold voltage of the MOSFET device. Individual readout voltage pulses can be applied for a brief period (e.g. about 1 µs or less, e.g. about 1 ns or less) and have amplitude than the write pulses. Hence, minimal stress is exerted on the MOSFET device, and the threshold voltage relaxation dynamics are only minimally disturbed, or not affected at all, by the application of the readout pulses.

In preferred embodiments of the invention, the MOSFET 700 is of the PMOS-type. The positive BTI effect in PMOS-type MOSFETs is very pronounced in scaled fabrication technologies, especially the ones that use high-k based gate dielectrics, and at gate voltages slightly higher than the nominal operation voltage. This enhances the short-term memory capacity and the nonlinear behavior of the MOSFET - two properties that are of fundamental importance in the framework of reservoir computing. Nevertheless, the BTI effect can also be obtained in NMOS-type MOSFETs. It is understood that write pulse voltage levels 'VP' and readout pulse voltage levels 'VRO' are negative in the case of PMOS-MOSFETs, but positive for NMOS-MOSFETs, and that the threshold voltage increases in absolute terms (i.e. the magnitude increases regardless of the sign) under voltage stress. For instance, in typical PMOS-type MOSFETs the shifting threshold voltage may be in the range from -0.1 V to -0,5 V, whereas write pulses may be applied with an amplitude of about -1.5 V. The gate dielectric of the gate stack may comprise an oxide, e.g. thermal SiOx, a high-k material such as HfOx, a nitride (e.g. SiN) or oxynitride. In contrast to FETs based on 2D semiconductors, which require sheets (e.g. monolayer sheet) of unconventional semiconductor materials like graphene or dichalcogenides and therefore are difficult to integrate with existing fabrication technology like mainstream CMOS, the channel region of the compute node MOSFET 600 is bulk-like semiconductor material region.

The phenomena of threshold voltage relaxation and cycling history dependence (also referred to as switching or input history dependence) in MOSFETs are generally perceived as reliability issues, as they would impair the optimal functioning of the switch. Their reduction or elimination is constantly sought after. The inventors found that, contrary to the common prejudice, these phenomena can be advantageously put to use in compute nodes of reservoir computing systems that operate on time sequences, e.g. sequential input data or time series. Remarkably, the threshold voltage relaxation of the MOSFETs confers short-term memory upon the reservoir compute nodes, whereas the cycling history dependence of the threshold voltage shift endows the reservoir compute nodes with the capability to separate different input data sequences. Moreover, the source-drain current in the sub-threshold region of the MOSFET is a nonlinear function (e.g. exponential function) of the difference between the immediate threshold voltage and the applied readout voltage during a readout cycle. This advantageously amplifies differences that exist between separable input data sequences. Here, the nonlinearity of the readout in the sub-threshold region further enhances the inherently nonlinear behavior of the threshold voltage shifts.

The preceding properties - short-term memory, input separability and nonlinearity in the outputs - are frequently referred to as the fundamental compute properties in the context of transient signal computing, reservoir computing and echo state networks. In this sense, each as-fabricated MOSFET can be used in a compute node for temporal signal processing, wherein the internal dynamics of the threshold voltage are a state variable of the compute node that influences the nonlinear input-output behavior (transfer function) of the node. As explained above, input data sequences with very different timescales can be processed.

FIG. 8 shows a reservoir computing system 800 according to a second embodiment. The reservoir system 800 differs from the reservoir system of the first embodiment in that a delay line 801 is connected between the output of the readout unit 140 and the gate terminal of the compute node MOSFET. This additional delayed feedback has the advantage of enriching the dynamic behavior of the nonlinear compute node and the reservoir computing system as a whole. Moreover, the delayed feedback can be combined with the masking of the inputs as taught in Appeltant, L. et al. "Information processing using a single dynamical node as complex system", Nature Communications, 2:468 (2011). In this case, a delay time interval is attributed to delay line 801 and subdivided into a plurality of virtual nodes, i.e. time-multiplexed rather than spatial nodes. The output sequence obtained by the readout unit 140 is translated into a sequence of virtual nodes travelling around the delay line 801 from which they can be tapped out. A pattern generator 802 is configured to repeatedly generate the items of a masking sequence M[t], here the bits of a binary masking sequence, which are used by a modulator or multiplier unit 803 to periodically modulate the pulse train, e.g. individually modulate each input pulse by the periodic masking sequence. This has the effect of projecting each data point of the input signal into a higher-dimensional input space associated with the number of items in the masking sequence. Often, the number of masking items (e.g. number of masking bits or masking values composing the sequence) corresponds to the number of virtual nodes stored and propagating along the delay line, such that the time slot assigned to each item of the masking sequence corresponds to the time duration of one virtual node. The round-trip time through the delay line with compute node may be divided into a plurality of time intervals of equal duration, which are associated with the respective virtual nodes. The masked pulse sequence is processed by the nonlinear compute node, time slot per time slot, and the corresponding outputs are placed onto the delay line 801 to populate the virtual nodes. Although shown as a digital masking sequence in the present embodiment, an analog masking scheme can be implemented in alternative embodiments of the invention, which is used to modulate the data points of the system input signal rather than the pulse sequence derived therefrom. A buffered or unbuffered delay line, data buffer (e.g. FIFO buffer), or other delay circuits may be used to implement the delay line 801.

FIG. 9 shows a reservoir computing system according to a third embodiment. Reservoir computing system 900 comprises a reservoir subsystem 901 that may be selected as one of the previously described embodiments, or variants thereof. Additionally, reservoir computing system 900 comprises an output buffer 904, which stores a part or all of the output sequence obtained by the readout unit for further processing by a readout layer 902. The readout layer 902 comprises one or multiple output neurons 903 and trainable weighted connections to each element of the output sequence that is currently stored in the output buffer 904. In embodiments of the invention, the output buffer may be a FIFO-type buffer, shift register or buffered delay line. The output buffer 904 can be flushed at regular time intervals to allow storing a new output sequence or part of an output sequence, or a stored element is pushed out of the output buffer 904 each time a freshly obtained readout element of the output sequence arrives. The readout layer 902 may be a regression layer. Additional neural network layers may be appended to the readout layer 902 in variants of this embodiment.

The reservoir computing system according to embodiments accepts scalar-valued temporal data or data-carrying signals. Vector-valued signals can be serialized in embodiments of the invention, either by concatenation of the vector signal components, i.e. appending the time signal of each component to obtain a longer scalar time signal, or by time-multiplexing the vector signal components, or else may be processed component-wise in parallel. In the latter case, the components of the scalar implementation of the reservoir computing system described hereinabove can be replicated to provide full support for vector input signals.

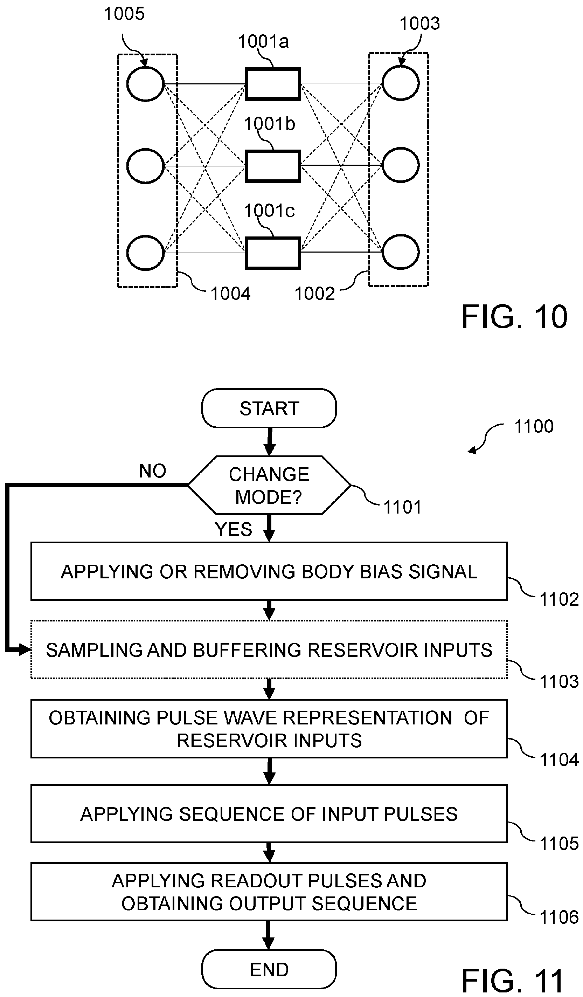

FIG. 10 shows a multi-node reservoir computing system according to a fourth embodiment. The expanded reservoir computing system 1000 comprises multiple independent reservoir subsystem 1001a-1001c that may be selected as one of the previously described embodiments of FIG. 1 and FIG. 8, or variants thereof. Multiple input signals, or components of a vector input signal, may be supplied in parallel to respective input units 1005 of an input layer 1004. Each input unit 1005 may be connected to exactly one reservoir subsystem 1001a-1001c for an independent treatment of the multiple input signals or input signal components. Alternatively, input units 1005 may be connected to several reservoir subsystem 1001a-1001c, e.g. to obtain linear combinations of the multiple input signals or input signal components prior to processing by the nonlinear compute nodes. Similarly, a readout layer 1002 comprising one or more output neurons 1003 may be provided to combine and further process the individual output sequences obtained by the reservoir subsystem 1001a-1001c. A readout weight is associated with each connection in the readout layer 1002 for weighting the corresponding data point of the output sequence, thus obtaining a sequence of weighted outputs, and the weighted outputs of the sequence of weighted outputs are combined into one or multiple output variables by the respective output neurons 1003. The readout layer 1002 may combine the output sequences of the reservoir subsystems data point per data point or may combine collections of data points, e.g. subsequences, stemming from each reservoir subsystem as explained in relation to the preceding embodiment of FIG. 9. The output variables can be used for regression, prediction or classification tasks, depending on the desired application.

In embodiments of the invention comprising a collection of independently operating MOSFET-based compute nodes, each compute node may receive the digital representation of a different feature as pulse wave. The driver circuits for the respective MOSFET-based compute nodes may include a hardware implementation of a trained feature extractor, such as a hardware-implemented neural network, in the case that input data to the reservoir computing system does not represent extracted features but is closer to a raw data format. This advantageously increases the dimensionality of the readout and hence the signal separation capability of the reservoir computing system.

In preferred embodiments, the reservoir computing system is provided as a single electronic article, e.g. an integrated circuit or semiconductor chip. Nonetheless, parts of the driver circuit and/or any further processing units related to the output sequences may be implemented on a different device, for instance on a server or dedicated hardware of an external service provider (e.g. cloud computing hardware). By way of example, the encoder unit may be remotely implemented for the purpose of speeding up the encoding of system inputs into digital pulse trains or acquiring and storing the digital pulse trains corresponding to many input signals with the goal of creating a faster to process training data set. Likewise, the output sequences stemming from many different distributed nonlinear compute nodes may be transmitted to an external computer, where they are combined for the purpose of training a readout layer or subsequent layers of a neural network. Providing a single device has the advantage that no transmission of encoded input signals of a training data set over vulnerable networks to a distant server is necessary. This is particularly relevant in the context of training data that contains private or sensitive information. Besides, communication overhead and network latency are avoided in this case.

Embodiments described so far relate to enhancement-type compute node MOSFETs. However, any practitioner in the art recognizes that the same beneficial effects can be achieved in depletion-type MOSFETs without having to exercise any inventive skill.

In a further aspect of the present invention, a reservoir computing method is disclosed which uses a compute node MOSFET in accordance with embodiments of the previous aspect.

FIG. 11 illustrates steps of a reservoir computing method 1100 performed by an RC system in accordance with embodiments of the previous aspect. In step 1101, the control unit of the RC system verifies whether the mode of operation of the compute node MOSFET needs to be changed, e.g. from floating mode to tied mode or vice versa. For instance, the mode of operation may be changed in response to user input, set to a default mode during system initialization, changed according to a training or testing protocol, or changed in response to a previously obtained reservoir output (e.g. depending on previously obtained training or test results, level of output accuracy, level of output variability). The default mode may be the floating mode. In embodiments in which the compute node MOSFET contains localized defect states in the gate dielectric (e.g. charge trapping sites) and displays the BTI effect in response to sufficiently strong write pulse amplitudes, the tied mode may coincide with the BTI mode. The control unit reconfigures the MOSFET-based compute nodes according to the currently selected mode of operation in step 1102, by removing the body bias signals from the body terminals of the compute node MOSFETs for floating mode operation and (re-)connecting the body bias signal (e.g. the source voltage signal 'VS', e.g. VS = GND) to the body terminals of the compute node MOSFETs for tied/BTI mode operation.

Optionally, reservoir input signals are sampled and/or buffered in step 1103. This step may be performed by a sampling unit and/or sample buffer unit when analog reservoir inputs need to be converted into the digital domain, thus obtaining a digital representation of the reservoir inputs, and may be useful matching the characteristic time scales of the reservoir input signals with the characteristic time scales of the compute node MOSFETs during floating mode operation. The reservoir inputs, e.g. the samples of a digital representation thereof, are encoded into a pulse train in step 1104 to obtain a pulse wave representation of the reservoir inputs. Reservoir inputs may be encoded through the pulse width, pulse time, pulse amplitude, pulse number, or combinations thereof. In typical embodiments, a pulse time encoding (e.g. pulse position in time) or pulse density scheme is used. A time point is associated with the application of each write pulses of the pulse sequence representative of the reservoir input, during which the MOSFET gate terminals are driven HIGH in subsequent step 1105. For instance, a set of discrete sampling time steps may be used to define the moments in time during which the pulses of the input pulse sequence are applied to the gate terminals of the MOSFET compute nodes in step 1105. Individual pulses of the sequence of input pulses are usually applied at a rate that is faster than the decay rate or relaxation rate of the threshold voltage of the compute node MOSFETs. This means that consecutive pulses of the input pulse sequence are applied with a time separation (delay) that is small compared to at least one of the relaxation or decay time constants associated with the floating body effect/BTI effect, which prevents the compute node MOSFETs from reaching a steady-state (equilibrium conditions) and keeps them in a transient regime. Eventually, individual readout pulses are applied to the gate terminals of the MOSFET compute nodes in step 1106 to obtain an output sequence corresponding to each MOSFET-based compute node. Readout pulses have smaller amplitudes and/or are shorter than the applied write pulses and induce a drain current through the respective transistor channels. These drain currents are detected as readout currents and may be used directly, e.g. as individual data points of the corresponding compute node output sequences, or accumulated into components of a feature vector corresponding to each compute node MOSFET (e.g. accumulated over time with respect to each reservoir input sequence). The readout current may be applied at regular time intervals, e.g. at each sampling time step, whereas the write pulses of the input pulse sequence may be applied irregularly according to the pulse encoding scheme. During the readout steps 1105, a small voltage differential is applied between the drain and source terminal, e.g. V(DS) ~ 0.05 V, to induce a small readout current flow (e.g. ~10 nA) through the channel region of the MOSFET. The readout pulses may bias the compute node MOSFETs in the sub-threshold regime.

In a further optional step, the output sequence or feature vector obtained by some or all compute nodes of the RC system may be combined and/or further processed by a readout layer or other neural network layers to obtain one or multiple reservoir outputs (e.g. predicted class, predicted output time sequence, etc.). Readout weights can be applied to the output sequence to obtain a sequence of weighted outputs. A plurality of weighted outputs of the sequence of weighted outputs can then be combined into one or multiple output variables. This enables the learning and performing regression or classification tasks based on the detected output currents.

Optionally, the mode of operation of the compute node MOSFETs may be switched again and, if desired, the above steps repeated for the other mode of operation. Furthermore, the reservoir computing method may comprise an initialization step for the MOSFET, during which the threshold voltage shift and the relaxation time constants are tuned to their desired values. To this end, positive and/or negative voltage pulses of different duration and/or amplitude may be applied to the gate of the MOSFET.

In some embodiments of the invention, the method may comprise the additional steps of an input masking scheme:
- sampling the input signal to obtain a plurality of sampled data points, or providing the input signal as a discrete time series comprising a plurality of sampled data points, wherein two successive data points are separated by a sampling time interval,
- applying a periodic input mask sequence to each sampled data point, e.g. by multiplying mask weights of an alternating pattern of mask weights with each sampled data points of the input signal, thus obtaining a masked input signal and masked pulse sequence, wherein a fixed time slot is allotted to each mask weight, the fixed time slot being a fraction of the sampling time interval.

Reservoir computing methods in accordance with embodiments of the invention may also comprise the step of feeding the obtained output sequence back to the gate terminal of the MOSFET of this compute node or a different compute node, where necessary comprising a preceding current-to-voltage conversion step.

In exemplary embodiments, the reservoir input signals may be sensor inputs relating to biometric time series acquisition. For instance, acceleration measurements by accelerometer sensors may be used to acquire time series used as reservoir inputs and the RC system may be configured to perform gait authentication. Error rates as low as 2.9 % were obtained by a single-node RC system for the gait authentication task on ten subjects, wherein the compute node MOSFET was operated in the floating mode.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A reservoir computing method comprising the steps of:
(i) providing a pulse wave representation of a time-dependent reservoir input, said pulse wave representation comprising a sequence of input pulses,
(ii) providing a MOSFET as a compute node of a reservoir computing system, the MOSFET comprising:
- a channel region between a source region and drain region, a body region adjacent to the channel region, and a gate stack in contact with said channel region,
- a gate terminal connected to the gate stack,
- a body terminal configured to apply a bias signal to the body region to control a voltage difference between the source region and the body region, the MOSFET being operable in a floating mode in the absence of the bias signal and in a tied mode in the presence of the bias signal, and the MOSFET displaying a history-dependent threshold voltage when driven by the sequence of input pulses in the floating mode,
(iii) removing the bias signal from the body terminal to operate the MOSFET in the floating mode,
(iv) applying the sequence of input pulses to the gate terminal of the MOSFET, each input pulse having a voltage amplitude larger than the threshold voltage of the MOSFET, thus causing history-dependent variations in the threshold voltage,
(v) acquiring an output sequence related to the compute node while the MOSFET threshold voltage is varying, by repeatedly applying readout pulses to the gate terminal of the MOSFET and simultaneously detecting a current through the channel region of the MOSFET, said readout pulses having a smaller amplitude compared to the input pulses.

2. The method of claim 1, wherein the readout pulses bias the MOSFET in the subthreshold region.

3. The method of any one of the preceding claims, wherein consecutive readout pulses are separated in time by a predetermined number of input pulses.

4. The method of any one of the preceding claims, further comprising:
(vi) buffering the sequence of input pulses to obtain buffered input pulses,
(vii) driving the gate terminal of the MOSFET with the buffered input pulses at a predetermined rate so that the MOSFET remains in a transient condition.

5. The method of any one of the preceding claims, wherein charge trapping sites are located in a gate dielectric of the MOSFET gate stack, said MOSFET thus displaying bias temperature instability when subjected to voltage stress and threshold voltage recovery after removal of the voltage stress, the method further comprising:
(viii) supplying the bias signal to the body terminal to operate the MOSFET in the tied mode,
(ix) applying the sequence of input pulses to the gate terminal of the MOSFET, thereby
causing a history-dependent shift in the MOSEFT threshold voltage, wherein the input pulses of the sequence of input pulses are driven with larger voltage amplitudes in the tied mode than in the floating mode.

6. The method of any one of the preceding claims, wherein source/drain terminals of the MOSFET are connected to a same voltage level of the reservoir computing system during application of the input pulses and a voltage differential is applied between said source/drain terminals during application of the readout pulses.

7. The method of any one of the preceding claims, wherein the step of providing the pulse wave representation of the time-dependent input signal comprises encoding the time-dependent input signal into a digital pulse train.

8. The method of any one of the preceding claims, wherein the steps (ii) to (v) are performed for each of a plurality of compute nodes of the reservoir computing system, the method further comprising:
(x) accumulating the currents through the channel region of the different compute node MOSFETs into a feature vector associated with the reservoir input.

9. A reservoir computing system comprising:
at least one MOSFET associated with at least one corresponding compute node, each of said at least one MOSFET comprising a channel region between a source region and drain region, a body region adjacent to the channel region, a gate stack in contact with said channel region, a gate terminal connected to the gate stack, and a body terminal configured to apply a bias signal to the body region to control a voltage difference between the source region and the body region, each of said at least one MOSFET being operable in a floating mode in the absence of the bias signal and in a tied mode in the presence of the bias signal, and each of said at least one MOSFET displaying an input history-dependent threshold voltage when driven by transistor inputs in the floating mode,
a control unit to selectively operate each of the at least one in the floating mode or the tied mode, the control unit being configured to remove a bias signal from the body terminal of each of the at least one MOSFET to operate the MOSFET in the floating mode and supply the bias signal to the body terminal of each of the at least one MOSFET to operate the MOSFET in the tied mode,
a driver circuit configured to encode a time-dependent reservoir input as a sequence of input pulses, drive the gate terminal of the at least one MOSFET with the sequence of input pulses as the transistor inputs, repeatedly generate readout pulses and apply the readout pulses to the gate terminal of the at least one MOSFET, wherein the readout pulses have a smaller voltage amplitude compared to the input pulses and the input pulses have larger voltage amplitudes compared to the threshold voltage of the at least one MOSFET,
a readout unit for acquiring an output sequence related to the at least one compute node while the corresponding MOSFET threshold voltage is varying, the readout unit being configured to detect a current through the channel region of the at least one MOSFET while the driver circuit is applying the readout pulses to the gate terminal of said at least one MOSFET.

10. The reservoir computing system of claim 9, wherein the driver circuit is configured to generate the readout pulses at a subthreshold voltage amplitude relative to the at least one MOSFET.

11. The reservoir computing system of any one of claims 9 to 10, further comprising a buffer unit for buffering the sequence of input pulses, wherein the driver circuit is configured to apply the input pulses from the buffer unit at a predetermined rate to the gate terminal of the MOSFET associated with each compute node.

12. The reservoir computing system of any one of claims 9 to 11, wherein each of said at least one MOSFET further comprises charge trapping sites located in a gate dielectric of the gate stack, thus displaying bias temperature instability when subjected to voltage stress and threshold voltage recovery after removal of the voltage stress, and wherein the driver circuit is configured to increase the pulse amplitude of the input pulses applied in the tied mode relative to the pulse amplitude of the input pulses applied in the floating mode.

13. The reservoir computing system of any one of claims 9 to 12, wherein the readout unit is configured to accumulate detected currents through the channel region of the MOSFET that relate to the same reservoir input.

14. The reservoir computing system of any one of claims 9 to 13, further comprising a delay line between the readout unit and the at least one MOSFET, and a masking unit configured to apply a periodic masking sequence to each reservoir input to obtain a masked reservoir input, wherein the driver circuit is configured to encode the masked reservoir input as the sequence of input pulses.

15. The reservoir computing system of any one of claims 9 to 14, comprising a plurality of MOSFETS associated with a corresponding plurality of compute nodes, and further comprising a readout layer configured to combine the output sequences obtained for the different compute nodes into a feature vector or a series of feature vectors associated with the reservoir input.
